# EUROPEAN PATENT APPLICATION

(11) **EP 2 597 856 A2**
(43) Date of publication of application: **29.05.2013**
(21) Application number: 12160871.5
(22) Date of filing: 22.03.2012
(51) Int. Cl.: H04N 1/48, H04N 1/417, G06K 9/20

(54) **Image scanning apparatus and method for image scanning**

(30) Priority: 23.11.2011 KR 20110123147
(71) Applicant: Samsung Electronics Co., Ltd., Suwon-si, Gyeonggi-do, 443-742 (KR)
(72) Inventor: Lee, Kyoung-youn, Incheon (KR); Kim, Jung-han, Suwon-si (KR)
(74) Representative: Waddington, Richard

(57) **Abstract**

An image scanning apparatus is provided. The image scanning apparatus includes a user interface unit receiving a color to be removed during a scanning operation, a scanning unit scanning an original copy by using a color-changeable light source, a storage unit storing the scanned image of the scanned original copy and a control unit controlling the light source to output a color corresponding to the received color onto the original copy.

## Description

### BACKGROUND

### 1. Field

The present invention relates to an image scanning apparatus and a method for image scanning and, more specifically, to an image scanning apparatus scanning a certain color by filtering it in a way of adjusting a color of a light source and a method for image scanning.

### 2. Description of the Related Art

An image scanning apparatus refers to an apparatus which converts an original image, such as a document, a picture and a film, into a digital data by scanning it. In this case, a digital data may be displayed on a computer monitor or be generated as an output image after being printed by a printer. The examples of the image scanning apparatus include a scanner, a copy machine, a facsimile, a MFP (Multi Function Peripheral) and the like.

In work places such as insurers, banks and public offices, where a large number of documents are used, an image scanning apparatus is used in a scanning operation. In this case, an additional work needs to be done in order to use only necessary information in a scanned data, and removing an edge or a background having a certain color from the scanned data makes the additional work easier.

Accordingly, a light source filter and an image processing have been used to remove an edge or a background having a certain color from a scanned image. However, a method using a light source filter is employed as to an image scanning apparatus having a CCD (Charge Coupled Device) image sensor, and a method using image processing is employed as to an image scanning apparatus having a CIS (Contact Image Sensor).

A method using a light source filter increases costs for manufacturing an image scanning apparatus. In addition, a method using image processing increases the pace of a scanning operation and leads to an additional processing time to remove a certain color from the scanned image. It is because a color scanning operation is needed to be done for image processing, even though a necessary data is a grayscale data.

Specifically, a color scanning operation has to be done in order to remove a certain color by using image processing, even though a necessary data is actually a grayscale image. In light of this, a method using an image processing slows down the pace of a color scanning operation, compared to that of a grayscale scanning operation. In addition, some of low-performance image scanning apparatuses which are not good at combining colors or calculating color-to-grayscale cannot carry out a function of removing a certain color.

### SUMMARY

Additional aspects and/or advantages will be set forth in part in the description which follows and, in part, will be apparent from the description, or may be learned by practice of the invention.

According to the present invention there is provided an apparatus and method as set forth in the appended claims. Other features of the invention will be apparent from the dependent claims, and the description which follows.

Accordingly, the present invention has been made to solve the above-mentioned disadvantages occurring in the prior art and other related disadvantages not described above. The present invention relates to an image scanning apparatus which may output a certain color by filtering it in a way of adjusting a color of a light source and a method for image scanning.

According to an exemplary embodiment, an image scanning apparatus includes a user interface unit receiving a color to be removed during a scanning operation, a scanning unit scanning an original copy by using a color-changeable light source, a storage unit storing the scanned image of the scanned original copy and a control unit controlling the light source to output a color corresponding to the received color onto the original copy.

In this case, the light source may be desirable to output a red wave length, a green wave length and a blue wave length separately.

In this case, the control unit may control the light source to output the red wave length, the green wave length and the blue wave length onto the original copy separately at a different timing.

Meanwhile, the control unit may control the light source to output only one of the red wave length, the green wave length and the blue wave length onto the original copy.

The control unit may control the light source to have a different output time corresponding to each wave length during a scanning operation of removing a color, compared to a grayscale scanning operation.

Meanwhile, the scanned image of the scanned original copy may be a grayscale image.

The user interface unit may display the scanned image as preview information.

The user interface unit may receive a RGB (red, green and blue) adjusted rate of a light source, and the control unit controls the light source by using the received RGB adjusted rate.

Meanwhile, the image scanning apparatus may further include a communication interface unit transmitting the stored scanned image.

In this case, the communication interface unit may receive information on a RGB adjusted rate of a light source, and the control unit may control the light source by using the received RGB adjusted rate,

Meanwhile, a method for image scanning by an image scanning apparatus including a color-changeable light source includes receiving a color to be removed during a scanning operation, controlling a light source to output a color corresponding to the received color onto an original copy, scanning the original copy by using the color-changed light source and storing the scanned image of the scanned original copy.

In this case, the light source may be desirable to output a red wave length, a green wave length and a blue wave length separately.

In this case, controlling may include controlling the light source to output the red wave length, the green wave length and the blue wave length onto the original copy separately at a different timing.

Meanwhile, the controlling may include controlling the light source to output only one of the red wave length, the green wave length and the blue wave length onto the original copy.

Meanwhile, the controlling may include controlling the light source to have a different output time corresponding to each wave length during a scanning operation for removing a color, compared to a grayscale scanning operation.

Meanwhile, the scanned image of the scanned original copy is a grayscale image.

Meanwhile, the method for image scanning may further include displaying the scanned image as preview information.

Meanwhile, the method for image scanning may further include receiving a RGB adjusted rate of a light source, and the controlling may include controlling the light source by using the received RGB adjusted rate.

Meanwhile, the method for image scanning may further include transmitting the stored scanned image.

Meanwhile, a computer-readable record medium including a program to perform a method for image scanning by an image scanning apparatus having a color-changeable light source includes receiving a color to be removed during a scanning operation, controlling a light source to output a color corresponding to the received color onto an original copy, scanning the original copy by using the color-changed light source and storing the scanned image of the scanned original copy.

### BRIEF DESCRIPTION OF THE DRAWINGS

The patent or application file contains at least one drawing executed in color. Copies of this patent or patent application with color drawing(s) will be provided by the Office upon request and payment of the necessary fee. The above and other features, aspects and advantages of the present invention will be more apparent from the following detailed description taken in conjunction with the accompanying drawings, in which:
FIG. 1 is a block diagram to explain configuration of an image scanning apparatus according to an exemplary embodiment.
FIG. 2 is a block diagram to explain configuration of a scanning unit of FIG. 1.
FIG. 3 is a timing view to explain a color scanning operation of FIG. 3.
FIG. 4 is a view to explain an example of an image data scanned by a color-scanning operation of FIG. 3.
FIG. 5 is a timing view to explain a grayscale scanning operation.
FIG. 6 is a view to explain an example of an image data scanned by a grayscale-scanning operation.
FIG. 7 is a timing view to explain a scanning operation for removing color red.
FIG. 8 is a view to explain an example of an image data scanned by a scanning operation for removing color red.
FIG. 9 is a timing view to explain a scanning operation for removing color cyan.
FIG. 10 is a view to explain an example of an image data scanned by a scanning operation for removing color cyan.
FIG. 11 is a view to explain an example of a user interface window able to be displayed on a user interface unit of FIG. 1.
FIG. 12 is a flowchart to explain a method for image scanning according to an exemplary embodiment.

### DETAILED DESCRIPTION

Hereinafter, embodiments of the present invention will be described in greater detail with reference to the accompanying drawings, in which aspects of the present invention are illustrated.

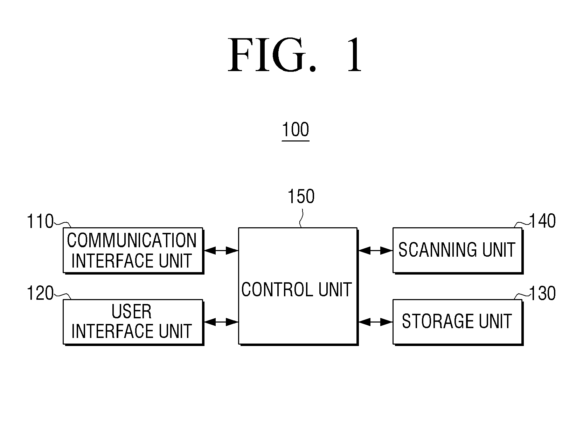

FIG. 1 is a block diagram to explain an image scanning apparatus according to an exemplary embodiment.

Referring to FIG. 1, an image scanning apparatus includes a communication interface unit 110, a user interface unit 120, a storage unit 130, a scanning unit 140 and a control unit 150. The example of the image scanning apparatus may include a scanner, a copy machine, a facsimile and a MFP (Multi Function Peripheral), which carries outs all the functions of the above-described apparatuses.

The communication interface unit 110 may be connected to a terminal device (Not illustrated), such as a PC, a laptop, a PDA and a digital camera, and transmit a data scanned in the image scanning apparatus 100 to a terminal device. Specifically, the communication interface unit 110 is formed in order to connect the image scanning apparatus 100 to an external device, and may be connected with a terminal device not only through LAN (Local Area Network) and Internet networks but also a USB (Universal Serial Bus) port.

The communication interface unit 110 may receive a scanning order. Specifically, the communication interface unit 110 may receive a color-scanning order, a grayscale-scanning order and a scanning order to remove a color from a terminal device. Herein, a color-scanning order is an order to scan an original copy in color mode, a grayscale-scanning order is an order to scan an original copy in grayscale mode, a scanning order to remove a color is an order to scan an original copy in grayscale mode by removing a certain color in the original copy. Herein, the communication interface unit 110 may receive information on a color to be removed or on a RGB adjusted rate of a light source.

The user interface unit 120 has various kinds of function keys to set or select functions provided by the image scanning apparatus 100 and displays all information provided by the image scanning apparatus 100. The user interface unit 120 may be realized as an apparatus which carries out both inputting and outputting, such as a touch pad, or an apparatus, which is a combination between a mouse and a monitor.

In addition, the user interface unit 120 receives a scanning order from a user. Herein, a scanning order may be one of a color-scanning order, a grayscale-scanning order and a scanning order to remove a color as described above.

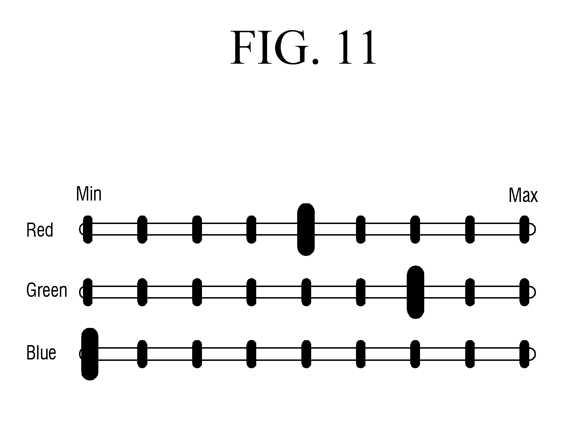

If a scanning order to remove a color is received, the user interface unit 120 may receive a color to be removed during a scanning operation. Specifically, the user interface unit 120 may display a user interface window to receive a color to be removed during a scanning operation. If a user selects a color to be removed on the displayed user interface window, control unit 150 recognizes the selected color to be removed during a scanning operation. Meanwhile, exemplary embodiments illustrate cases in which a color to be removed during a scanning operation is directly received, but the user interface unit 120 may receive a color of a light source during a scanning operation. In addition, exemplary embodiments illustrate cases in which a certain color is directly received, but, in reality, a RGB adjusted rate of a light source may be received as illustrated FIG. 11. In this case, a color corresponding to the received RGB adjusted rate of a light source may be received to be removed.

In addition, the user interface unit 120 may display a scanned image. Specifically, the user interface unit 120 may display a scanned image generated by a pre-scanning operation or a scanning operation as preview information.

The storage unit 130 may store a scanned data scanned in the image scanning apparatus 100. In addition, the storage unit 130 may be realized as a storage medium in the image scanning apparatus 100 or an external medium, such as a Removable Disk including a USB memory, a storage medium connected to a Host and a Web server connected via networks.

The scanning unit 140 scans an original copy by using a color-changeable light source. Specifically, the scanning unit 140 may scan an original copy on a flatbed or an original copy stored in and provided by an automatic supply device. In addition, the scanning unit 140 may output a light source corresponding to a color input through the communication interface unit 110 or the user interface unit 120 onto an original copy, and generate a scanned image by scanning a reflected light. Further details about configuration and operations of the scanning unit 140 will be provided in the followings.

The control unit 150 controls every configuration of the image scanning apparatus 100. Specifically, if a scanning order is received from the user interface unit 120 or the communication interface unit 110, the control unit 150 may controls the scanning unit 140 to perform a scanning operation corresponding to the received scanning order. For instance, if the received scanning order is a scanning order of removing color red, the control unit 150 may control the scanning unit 140 to output a light source onto an original copy to remove color red. In addition, the control unit 150 may control the storage unit 130 to store the scanned image and control the communication interface unit 110 to transmit the stored scanned image to an external terminal device (or a certain storage medium designated by a user).

Accordingly, the image scanning apparatus 100 may generate a scanned image where a certain color is removed by changing a light source without performing an additional image processing operation. In addition, the image scanning apparatus 100 does not need to scan an original copy in color mode for an image processing which is to remove a certain color, and may generate a scanned image with a certain color removed by performing a conventional grayscale-scanning operation, leading to increasing the pace of the scanning operation.

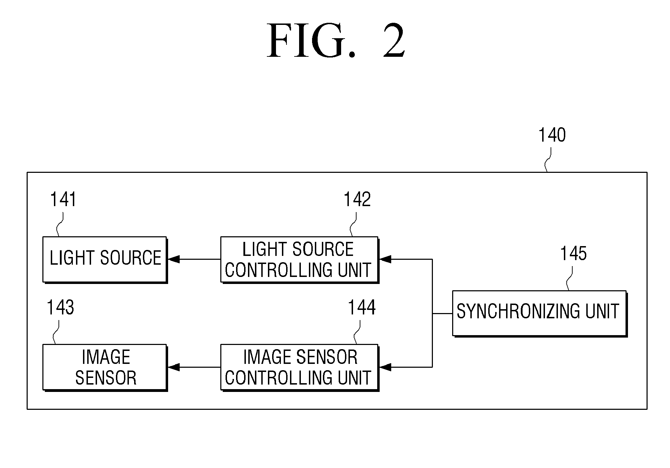

FIG. 2 is a block diagram to explain configuration of FIG. 1.

Referring to FIG. 1, the scanning unit 140 includes a light source 141, a light-source controlling unit 142, an image sensor 143, an image-sensor controlling unit 144 and a synchronizing unit 145.

The light source 141 may be a light source, such as a RGB LED, which may output a Red wave length, a Green wave length and a Blue wave length separately. Specifically, the light source 141 receives a motion signal corresponding to each wave length from the light source controlling unit 142, described in the followings, and performs a scanning motion according to a motion signal corresponding to the each received wave length.

Meanwhile, exemplary embodiments relate to using a light source outputting a plurality of wave lengths, or a plurality of light sources, such as a first light source outputting only a Red wave length, a second light source outputting only a Green wave length and a third light source outputting only a Blue wave length, may be used. For instance, if a scanning operation for removing color red is largely used in public offices and banks, a first light source for a color scanning operation (or a light source outputting every RGB wave length, such as a RGB LED) and a second light source for a scanning operation for removing color red (or a light source outputting a Red wave length, such as a Red LED).

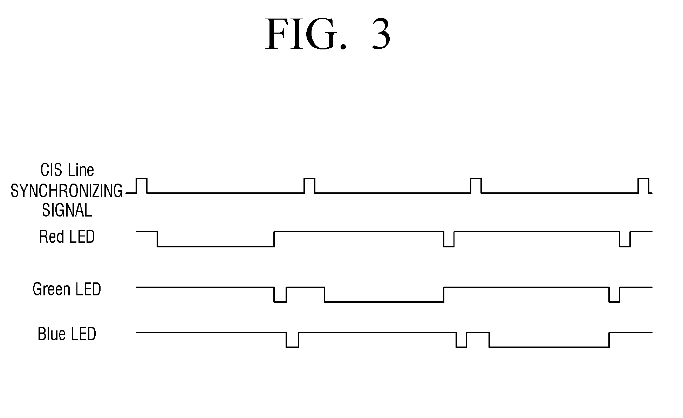

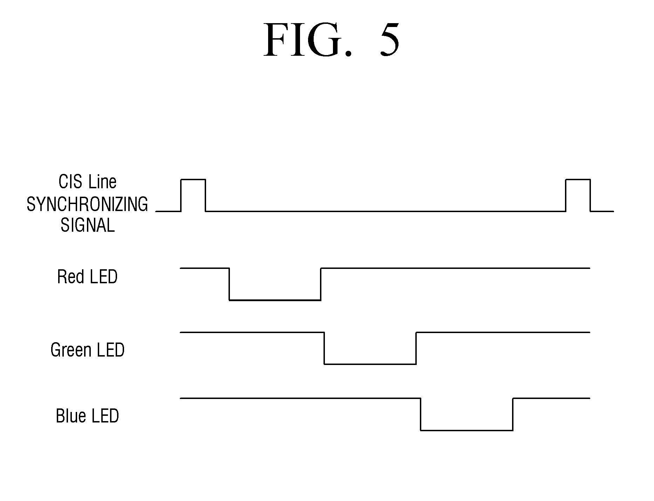

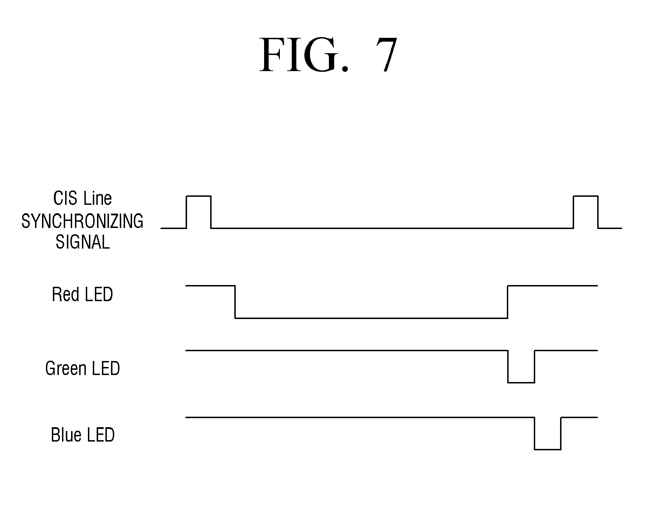

The light source controlling unit 142 controls an output time (or a lighting time) of every wave length. Specifically, the light source controlling unit 142 may controls an output time corresponding to each wave length of a light source by providing motion signals corresponding to a Red wave length, a Green wave length and a Blue wave length of the light source. For instance, if a color scanning is needed to be done, the light source controlling unit 142 may input motion signals corresponding to each wave length to the light source 141 as illustrated in FIG. 3. If a grayscale scanning is needed to be done, the light source controlling unit 142 may input motion signals corresponding to each wave length to the light source 141 as illustrated in FIG. 5. In addition, if a scanning operation for removing a certain color (ex. color red) is needed to be done, the light source controlling unit 142 may input motion signals corresponding to each wave length to the light source 141 as illustrated in FIG. 7.

The image sensor 143 scans a reflected light which is scanned on an original copy. Specifically, the image sensor 143 receives a reflected light reflected by an original copy, photoelectrically converts an image formed by the reflected light into an electric signal and outputs voltage in proportion to the amount of the reflected light. The image sensor 143 may be a CCD (Charge Coupled Device) or a CIS (Contact Image Sensor).

The image sensor controlling unit 144 controls operations of the image sensor 143. Specifically, the image sensor controlling unit 144 may controls an exposure time when the image sensor 143 receives a reflected light.

The synchronizing unit 145 synchronizes operation timings of the light source controlling unit 142 and the image sensor controlling unit 143 in order to output a RGB light source according to a signal period where the image sensor 143 reads a scan line.

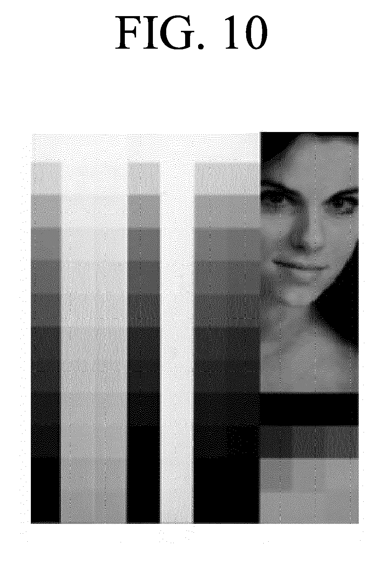

Hereinafter, referring FIGS. 3 to 10, scanning operations to acquire a scan line will be described.

FIG. 3 is a timing view to explain a color scanning operation.

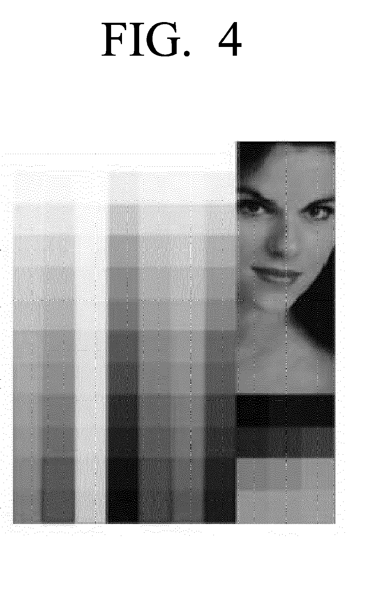

Referring to FIG. 3, motion signals of each wave length which are input to a light source during a color scanning operation and a timing view of motion signals of the image sensor are illustrated. A color scanning operation acquires a scan data of a scan line by adding up each data of three scan lines where a Red wave length, a Green wave length and a Blue wave length light alternatively. In this way, a scanned image becomes a color image as illustrated in FIG. 4.

FIG. 5 is a timing view to explain a grayscale scanning operation

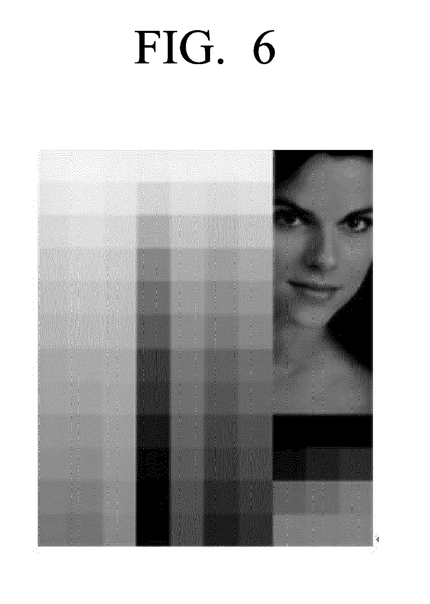

Referring to FIG. 5, motions signals of each wave length which are input to a light source during a grayscale scanning operation and a timing view of motion signals of the image sensor are illustrated. A grayscale scanning operation uses a line's image data which is acquired by outputting each of a Red wave length, a Green wave length and a Blue wave length separately for a one third of a scan line period so that the pace of the scanning operation is three times faster than that of a color scanning operation. In this way, a scanned image becomes a grayscale image as illustrated in FIG. 6.

FIG. 7 is a timing view to explain a scanning operation for removing color red.

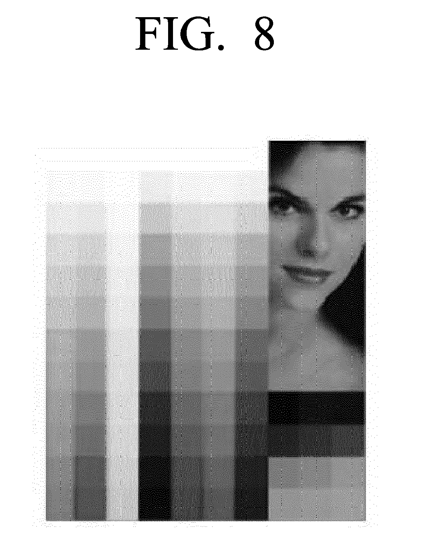

Referring to FIG. 7, motion signals of each wave length which are input to a light source during a scanning operation for removing color red and a timing view of motion signals of the image sensor are illustrated. A scanning operation for removing color red uses a line's image data which is acquired by increasing an output time of a Red wave length during a scan line period. Specifically, when a Red wave length is scanned on an original copy, an area of the original copy having color red does not reflect only the color red so that remaining areas of the original copy, except for an area having color red, is read by the image sensor 143. In addition, this operation is performed during a scan line period so that the pace of a scanning operation is equivalent to that of a grayscale scanning operation. In this way, a scanned image becomes a grayscale image as illustrated in FIG. 8. In addition, even though FIG. 8 illustrates a grayscale image like FIG. 6, the way how an area having color red is read is different from that of FIG. 6.

Meanwhile, FIG. 8 illustrates that a Green wave length and a Blue wave length light as well for a certain period of time during a scanning operation for removing color red, however, it is possible to output only a Red wave length in reality.

In addition, this kind of process may be performed as well in a case of a scanning operation for removing color green or blue.

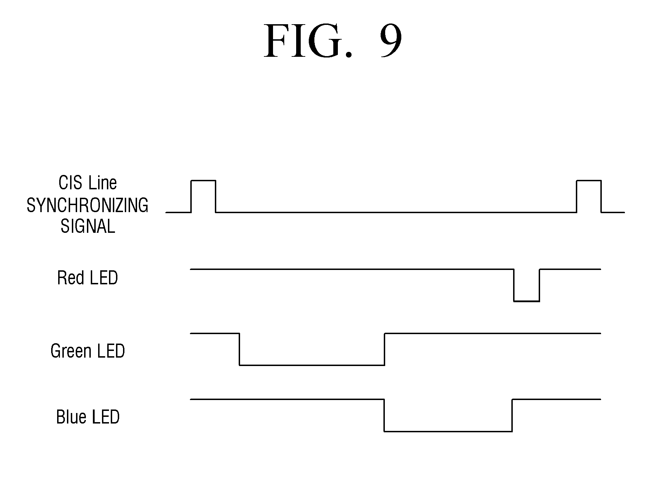

FIG. 9 is a timing view to explain a scanning operation for removing color cyan.

Referring to FIG. 9, motion signals of each wave length which are input to a light source during a scanning operation for removing color cyan and a timing view of motion signals of the image sensor are illustrated. A scanning operation for removing color cyan uses a line's image data which is acquired by increasing an output time of a Green wave length and a Blue wave length during a scan line period. Specifically, When a Green wave length and a Blue wave length are scanned on an original copy, an area of the original copy having color cyan, in which green and blue are combined, does not reflect the Green wave length and the Blue wave length so that remaining areas of the original copy, except for an area having color cyan, is read by the image sensor 143. In addition, this operation is performed in a scan line period so that the pace of a scanning operation for removing color cyan is the same as that of a grayscale scanning operation. Even though FIG. 9 illustrates a grayscale image like FIG. 6, the way how an area having color red is read is different from that of FIG. 6.

According to the above-described exemplary embodiments, the image scanning apparatus using a light source including a plurality of wave lengths may remove a color by adjusting an on-duty of each wave length. Accordingly, the present invention doesn't need a color filter and an additional image processing for removing a color so that it may help a low-performance image scanning apparatus remove a color.

FIGS 3 to 10 illustrates cases in which each of a Red wave length, a Green wave length and a Blue wave length is controlled to light on an original copy at a different time, but, in reality, at least two wave lengths may light at the same time.

FIG. 11 is a view to explain an example of a user interface window to be displayed on the user interface unit 120 of FIG. 1.

Referring to FIG. 11, the user interface window displays a slide bar to receive a RGB adjusted rate of a light source.

Accordingly, a user may use the displayed user interface window to adjust an each rate of a Red wave length, a Green wave length and a Blue wave length of a light source. FIG. 11 illustrates a case of receiving only a RGB adjusted rate of a light source, but, in reality, a plurality of colors may be displayed and one of a plurality colors may be selected to be removed.

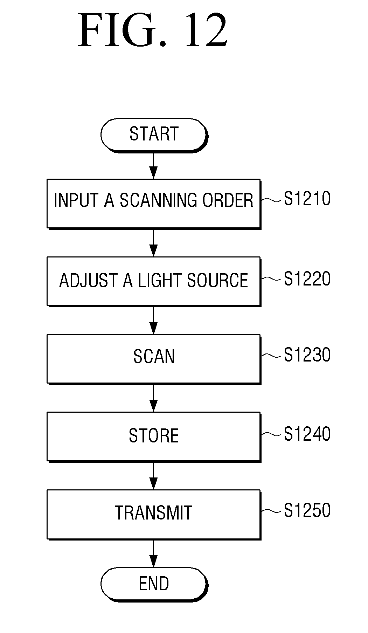

FIG. 12 is a flowchart to explain an image scanning apparatus according to an exemplary embodiment.

Referring to FIG. 12, first of all, a scanning order is received S1210. The scanning order may be one of the above described color scanning order, grayscale scanning order or scanning order to remove a color. If a scanning order to remove a color is received, a color to be removed may be additionally input. Meanwhile, if a color to be removed is a default color, an operation of inputting a color to be removed may be omitted.

In addition, a light source is controlled to output a color corresponding to the input color S1220. Specifically, an output time corresponding to each of a Red wave length, a Green wave length and a Blue wave length of a light source may be controlled by providing motion signals corresponding to a Red wave length, a Green wave length and a Blue wave length of a light source 141. For instance, if a color scanning operation is needed to be done, motion signals corresponding to wave lengths may be received to the light source 141 as illustrated in Fig. 3. If a grayscale scanning operation is needed to be done, motion signals corresponding to wave lengths may be received to the light source 141 as illustrated in FIG. 5. If a scanning operation to remove a certain color (ex, color red), motion signals corresponding to wave lengths may be received to the light source 141.

In addition, an original copy is scanned by using a color-changed light source S1230. Specifically, a reflected light reflected from an original copy may be received, an image formed by the reflected light may be photoelectrically converted into an electric signal and voltage in proportion to an amount of the reflected light may be output. The image sensor may be a CCD (Charge Coupled Device) or a CIS (Contact Image Sensor).

In addition, a scanned image of a scanned original copy is stored S1240, and the stored scanned image is transmitted S1250. Meanwhile, before performing the above-described operation, the scanned image may be displayed for a user as preview information and whether to store or transmit the scanned image may be chosen.

Accordingly, a method for image scanning according to exemplary embodiments may generate a scanned image where a certain color is removed by changing a light source without performing an additional image processing. In addition, performing a color scanning operation on an original copy for an image processing to remove a certain color does not necessary. In other words, it is possible to generate a scanned image with a certain color removed by performing a conventional grayscale scanning operation, leading to a much faster pace of a scanning operation. The method for image scanning illustrated in FIG. 12 may be performed in the image scanning apparatus illustrated in FIG. 1 and other kinds of image scanning apparatuses having different configurations.

In addition, the above-described method for image scanning may be realized as at least one of executive programs to execute the above-described image scanning apparatus, and these kinds of executive programs may be stored in computer-readable record mediums.

Accordingly, each block of the present invention may operate as a computer-recordable code on a computer-readable record medium. A computer-readable record medium may be a device which may store a data readable by a computer system.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image scanning apparatus, comprising:
a user interface unit receiving a color to be removed during a scanning operation;
a scanning unit scanning an original copy by using a color-changeable light source;
a storage unit storing the scanned image of the scanned original copy; and
a control unit controlling the light source to output a color corresponding to the received color onto the original copy.

2. The apparatus as claimed in claim 1, wherein the light source can output a Red wave length, a Green wave length and a Blue wave length separately.

3. The apparatus as claimed in claim 2, wherein the control unit controls the light source to output the Red wave length, the Green wave length and the Blue wave length onto the original copy separately at a different timing.

4. The apparatus as claimed in any one of claims 2 and 3, wherein the control unit controls the light source to output only one of the Red wave length, the Green wave length and the Blue wave length onto the original copy.

5. The apparatus as claimed in any one of claims 2 and 3, wherein the control unit controls the light source to have a different output time corresponding to each wave length during a scanning operation to remove a color, compared to a grayscale scanning operation.

6. The apparatus as claimed in any one of claims 1 and 5, wherein the scanned image of the scanned original copy is a grayscale image.

7. The apparatus as claimed in any one of claims 1 and 6, wherein the user interface unit displays the scanned image as preview information.

8. The apparatus as claimed in any one of claims 1 and 7, wherein the user interface unit receives a RGB adjusted rate of a light source, and the control unit controls the light source by using the received RGB adjusted rate.

9. A method for image scanning by an image scanning apparatus including a color-changeable light source, comprising:
receiving a color to be removed during a scanning operation;
controlling a light source to output a color corresponding to the received color onto an original copy;
scanning the original copy by using the color-changed light source; and
storing the scanned image of the scanned original copy.

10. The method as claimed in claim 9, wherein the light source can output a Red wave length, a Green wave length and a Blue wave length separately.

11. The method as claimed in claim 10, wherein the controlling comprises controlling the light source to output the Red wave length, the Green wave length and the Blue wave length onto the original copy separately at a different timing.

12. The method as claimed in any one of claims 10 and 11, wherein the controlling comprises controlling the light source to output only one of the Red wave length, the Green wave length and the Blue wave length onto the original copy.

13. The method as claimed in any one of claims 10 and 11, wherein the controlling comprises controlling the light source to have a different output time corresponding to each wave length during a scanning operation to remove a color, compared to a grayscale scanning operation.

14. The method as claimed in any one of claims 9 and 13, wherein the scanned image of the scanned original copy is a grayscale image.

15. The method as claimed in any one of claims 9 and 14, further comprising:
receiving a RGB adjusted rate of a light source;
wherein the controlling comprises controlling the light source by using the received RGB adjusted rate.
